(19) Europäisches Patentamt
European Patent Office
Office européen des brevets

(11) EP 3 411 962 B1

(12) FASCICULE DE BREVET EUROPEEN

(45) Date de publication et mention de la délivrance du brevet:
**11.12.2019 Bulletin 2019/50**

(21) Numéro de dépôt: **17707378.0**

(22) Date de dépôt: **03.02.2017**

(51) Int Cl.:
***H04L 1/06*** (2006.01)

(86) Numéro de dépôt international:
**PCT/FR2017/050253**

(87) Numéro de publication internationale:
**WO 2017/134403 (10.08.2017 Gazette 2017/32)**

(54) **TECHNIQUE DE MODULATION SPATIALE ET DISPOSITIF RECEPTEUR ASSOCIE**

RÄUMLICHE MODULATIONSTECHNIK SOWIE DAZUGEHÖRIGE EMPFANGSVORRICHTUNG

SPATIAL MODULATION TECHNIQUE AND CORRESPONDING RECEIVING APPARATUS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.02.2016 FR 1600202**

(43) Date de publication de la demande:
**12.12.2018 Bulletin 2018/50**

(73) Titulaire: **Institut National des Sciences Appliquées de Rennes
35708 Rennes Cedex 7 (FR)**

(72) Inventeurs:
• **MOKH, Ali
92160 Antony (FR)**
• **HELARD, Maryline
35700 Rennes (FR)**
• **KOKAR, Yvan
35700 Rennes (FR)**
• **CRUSSIERE, Matthieu
35890 Laille (FR)**

• **PREVOTET, Jean-Christophe
35500 Vitre (FR)**

(74) Mandataire: **Novagraaf Technologies
12 place des Halles Saint Louis
56100 Lorient (FR)**

(56) Documents cités:
**FR-A1- 2 954 629**

• **DINH-THUY PHAN-HUY ET AL: "Receive antenna shift keying for time reversal wireless communications", COMMUNICATIONS (ICC), 2012 IEEE INTERNATIONAL CONFERENCE ON, IEEE, 10 juin 2012 (2012-06-10), pages 4852-4856, XP032273684, DOI: 10.1109/ICC.2012.6363854 ISBN: 978-1-4577-2052-9**
• **RONALD Y CHANG ET AL: "New Space Shift Keying Modulation with Hamming Code-Aided Constellation Design", IEEE WIRELESS COMMUNICATIONS LETTERS, IEEE, PISCATAWAY, NJ, USA, vol. 1, no. 1, 1 février 2012 (2012-02-01), pages 2-5, XP011414172, ISSN: 2162-2337, DOI: 10.1109/WCL.2012.102711.110037**

## Description

### 1. Domaine de l'invention.

L'invention concerne des communications numériques par transmission radioélectriques. L'invention concerne plus particulièrement l'augmentation de la capacité de transmission d'un canal dans un système multi-antennes mettant en œuvre une modulation spatiale.

### 2. Etat de l'art.

De nombreuses techniques de modulation existent pour la mise en œuvre de systèmes de transmissions par émission et réception de signaux radioélectriques. Parmi les différentes modulations existantes sont apparues récemment des techniques de modulations spatiales où l'activation d'un ou plusieurs émetteurs émettant respectivement vers un ou plusieurs récepteurs sur un intervalle de temps prédéterminé, code de l'information, outre les données pouvant être portées par l'utilisation d'une autre modulation (transmission d'un symbole). Parmi ces modulations spatiales figurent la modulation RASK (de l'acronyme « Receive Antenna Shift keying » et qui signifie codage par décalage d'antenne cible) ou encore RSM (de l'acronyme « Receive Spatial Modulation » et qui signifie modulation spatiale en réception »), par exemple.

La demande de brevet français FR 09 591 52, intitulée « PROCEDE DE TRANSMISSION D'UN SIGNAL SOURCE, PROCEDE DE RECEPTION D'UN SIGNAL EMIS, EMETTEUR, RECEPTEUR, SIGNAL ET PROGRAMMES D'ORDINATEUR CORRESPONDANTS », publiée sous le n° 2 524 229 (France Telecom, 17 décembre 2009), décrit un procédé de transmission d'un signal source comprenant une pluralité de séquences binaires, vers NR antennes de réception, avec NR supérieur ou égal à deux. Selon la méthode décrite dans ce document, une opération de pré-filtrage prévoit que pour une séquence binaire du signal source, une focalisation vers au moins une des antennes de réception, dite antenne cible, est mise en œuvre. En outre, toujours selon cette méthode, l'antenne cible et le pré-filtrage de focalisation associés sont choisis en fonction d'une valeur de la séquence binaire destinée à être émise.

Ce type de modulation présente un ratio, entre la complexité de mise en œuvre et la capacité de canal, susceptible d'être amélioré.

### 3. Résumé de l'invention.

L'invention propose un procédé de transmission, permettant d'améliorer au moins la capacité d'un canal de télécommunication mettant en œuvre une modulation spatiale en proposant un procédé de transmission, depuis au moins une antenne d'émission, d'un signal comprenant une pluralité de séquences binaires, vers tout ou partie de $n$ antennes de réception, $n$ étant un entier supérieur ou égal à 2, ce procédé mettant en œuvre, préalablement à une étape d'émission de l'une des séquences binaires du signal source, un possible pré-filtrage de focalisation de la séquence binaire vers des antennes cibles parmi les n antennes de réception, et le possible pré-filtrage de focalisation associé étant choisi en fonction d'une valeur de la première séquence binaire, le procédé comprenant en outre :

- au moins une étape de transmission adaptée à transmettre une première information (binaire ou M-aire) en utilisant l'absence simultanée et délibérée de focalisation vers chacune des $n$ antennes de réception, pendant un nombre entier $k$ prédéterminé de temps (durées) symbole,
- et, éventuellement, une modulation de la puissance émise par la au moins une antenne d'émission, participant à un codage d'une seconde information (binaire ou M-aire).

Il est considéré comme une absence délibérée de focalisation vers l'ensemble des $n$ antennes en réception, soit une absence d'activation d'un quelconque faisceau vers ces antennes (puissance d'émission nulle), soit, pour tous les faisceaux activés, une émission d'une puissance conséquemment réduite en dessous d'un seuil de puissance prédéterminé.

Selon un mode de réalisation de l'invention, la seconde information binaire et la première information constituent ensemble une même et seule information binaire interprétable en tant que telle.

Avantageusement, le nombre entier $k$ de temps symbole est inférieur ou égal à un nombre prédéterminé, tel que 5, par exemple.

Avantageusement, la modulation de puissance comprend une sélection d'un intervalle de valeurs de puissance parmi un nombre entier $p$ prédéterminé d'intervalles de valeurs de puissance.

Selon un mode de réalisation de l'invention, pour chaque nouveau temps symbole, le nombre d'antennes RAn en réception, visées par activation d'un faisceau (en émission), varie et peut être compris entre 0 et n.

L'invention concerne également un dispositif récepteur adapté à la réception et au décodage d'au moins une séquence binaire d'un signal comprenant une pluralité de séquences binaires, la séquence ayant fait l'objet, préalablement à son émission par un émetteur distant, d'un pré-filtrage de focalisation vers aucune, une ou plusieurs antennes cible parmi $n$ antennes de réception, et le pré-filtrage de focalisation associé étant choisi en fonction d'une valeur de la séquence binaire.

Il est entendu ici par les termes « pré-filtrage de focalisation » vers une ou plusieurs antennes, un ensemble d'opérations visant à définir quels faisceaux d'émission doivent être activés (et par conséquent quels faisceaux doivent être désactivés) en fonction d'une séquence à transmettre pour un temps symbole.

Ainsi, opérer un pré-filtrage ne sous-entend pas forcément la présence d'un faisceau activé consécutivement au pré-filtrage, mais bien la transposition entre la séquence et la combinaison d'antennes à cibler, laquelle combinaison peut comprendre le cas d'absence totale de faisceaux (d'antenne(s) à cibler).

Le dispositif récepteur comprenant en outre :

- un module de décodage d'une première information binaire transmise et au moins partiellement codée en utilisant l'absence délibérée de focalisation vers l'ensemble des antennes reliées audit récepteur, depuis au moins un émetteur distant, pendant un nombre entier $k$ prédéterminé de temps symbole,
- et/ou un module de décodage d'une seconde information binaire codée par modulation de la puissance émise par au moins une antenne d'émission distante.

L'invention concerne enfin un produit programme d'ordinateur chargeable directement dans la mémoire interne d'un ordinateur comprenant des portions de code de logiciel pour l'exécution des étapes du procédé décrit ci-avant lorsque ce programme est exécuté sur un ordinateur.

## 4. Liste des figures.

L'invention sera mieux comprise, et d'autres particularités et avantages apparaîtront à la lecture de la description qui va suivre, la description faisant référence aux dessins annexés parmi lesquels :

- la **figure 1** représente un système de communications de données par voie radiofréquences selon une technique RASK appartenant à l'état de l'art.

- la **figure 2** représente un système de télécommunication de données par voie radiofréquences selon un mode de réalisation particulier et non limitatif de l'invention, pendant un premier temps symbole.

- la **figure 3** représente le système de télécommunication déjà représenté figure 2, pendant un second temps symbole.

- la **figure 4** représente le système de télécommunication déjà représenté sur les figures 2 et 3, pendant un troisième temps symbole.

## 5. Description détaillée de modes de réalisation de l'invention.

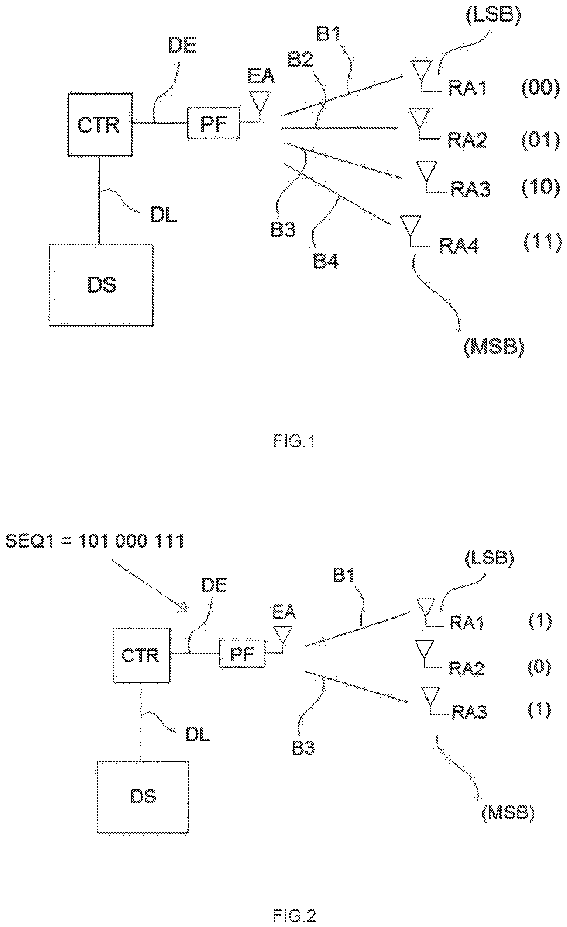

Sur les **figures 1 à 4**, les modules représentés sont des unités fonctionnelles, qui correspondent ou non à des unités physiquement distinguables. Par exemple, ces modules ou certains d'entre eux sont regroupés dans un unique composant, ou constitués des fonctionnalités d'un même logiciel. *A contrario*, selon d'autres modes de réalisation, certains modules sont composés d'entités physiques séparées.

La **figure 1** représente un système de communications de données par voie de communication de radiofréquences selon une technique appartenant à l'état de l'art. Ce système met en œuvre une modulation de type RASK (de l'acronyme « Receive Antenna Shift Keying » et qui signifie codage par décalage d'antenne cible. L'émetteur EA est adapté à la création d'un ou plusieurs faisceaux B1, B2, B3, B4 vers une ou plusieurs antennes de réception RA1, RA2, RA3 et RA4. L'antenne émettrice EA opère en fonction notamment d'un pré-filtrage de focalisation mis en œuvre par un module de pré-filtrage PF qui contrôle la présence ou l'absence de chacun des faisceaux B1, B2, B3, B4 en fonction d'un mot logique à transmettre, reçu depuis un lien d'entrée DE du module de pré-filtrage PF. Selon cette technique, il existe toujours au moins un faisceau actif. Des informations logiques (ou mots logiques) à transmettre depuis l'antenne EA, sont fournies séquentiellement au module de pré-filtrage PF par le biais du lien DE, sous contrôle d'un contrôleur CTR. Le contrôleur CTR lit les informations à transmettre depuis une source de données DS, et au travers d'un lien DL. L'ensemble des caractéristiques des éléments de contrôle CTR, de pré-filtrage PF, de transfert des données sur les liens DL et DE, ne sont pas décrits plus encore ici, car bien connus de l'homme du métier des dispositifs et modulations numériques et n'étant pas utiles à la compréhension du système de modulation décrit.

Le contrôleur CTR, le module de pré-filtrage PF et l'antenne d'émission EA constituent ensemble une station d'émission mettant en œuvre une technique de communication de données (transmission de données) comprenant une modulation spatiale RASK.

Selon cette technique, une table de correspondance (*mapping*) est établie entre des combinaisons de valeurs binaires (mots binaires ou fragments de mots binaires) et une antenne cible parmi l'ensemble des antennes cibles.

Ainsi, par exemple, l'antenne RA1 affectée au poids binaire le plus faible, correspond à la séquence binaire 00. De la même façon, la séquence binaire 01 est affectée à l'antenne RA2, et les séquences 10 et 11 sont respectivement affectées aux antennes RA3 et RA4 de la figure 1. RA4 est ici associée à l'élément binaire de poids le plus fort.

Si la séquence binaire '00101101' est issue de la source de données DS, en vue de son émission depuis l'antenne d'émission EA, sous contrôle du contrôleur CTR, le module de pré-filtrage de focalisation PF permettra la création séquentielle des faisceaux de transmission B1 (pour le mot '00'), puis B3 (pour le mot '10'), puis B4 (pour le mot '11') et enfin B2 (pour le mot '01'), conformément à la table de correspondance prédéfinie.

Le pré-filtrage PF met donc en œuvre une technique de focalisation spatiale (encore appelée pré-codage).

Il est connu que cette technique s'applique en outre à une pluralité d'antennes d'émission EAi transmettant vers une ou plusieurs antennes en réception RAj.

Cette technique se base sur une correspondance prédéfinie entre des valeurs binaires (mots binaires, fragments de mots binaires) et des antennes cibles respectivement associées à ces valeurs.

La **figure 2** représente un système de télécommunication de données par voie radiofréquences selon un mode de réalisation particulier et non limitatif de l'invention. Le système selon l'invention comprend un émetteur EA adapté à la création d'un ou plusieurs faisceaux B1, B2, B3 vers une ou plusieurs antennes de réception RA1, RA2 et RA3. L'antenne émettrice EA opère en fonction notamment d'un pré-filtrage de focalisation mis en œuvre par un module de pré-filtrage PF qui contrôle la présence ou l'absence de chacun des faisceaux B1, B2 (non représenté sur la figure), et B3 en fonction d'un mot logique à transmettre, reçu depuis un lien d'entrée DE de la fonction de pré-filtrage. Des informations logiques (ou mots logiques) à transmettre depuis l'antenne EA, sont fournies séquentiellement au module de pré-filtrage PF par le biais du lien DE, sous contrôle d'un contrôleur CTR. Le contrôleur CTR lit les informations à transmettre depuis une source de données DS, et au travers d'un lien DL. L'ensemble des caractéristiques des éléments de contrôle CTR, de pré-filtrage PF, de transfert des données sur les liens DL et DE, ne sont pas décrits plus encore ici, car bien connus de l'homme du métier et non utiles à la compréhension de l'invention.

Le contrôleur CTR, le module de pré-filtrage PF et l'antenne d'émission EA constituent ensemble une station d'émission selon l'invention mettant en œuvre une technique de communication de données (transmission de données) comprenant une modulation spatiale nouvelle.

Astucieusement, la modulation spatiale utilisée permet de transmettre une première information binaire SEQ1 en utilisant l'absence de focalisation vers l'une quelconque desdites $n$ antennes RA de réception, pendant un ou plusieurs temps symbole.

En effet, la technique de modulation spatiale selon le mode de réalisation préféré de l'invention repose sur le principe suivant :

pour chacune des antennes RAn en réception, la détection (de la présence) d'un faisceau représente une valeur d'un élément binaire en réception et l'absence de faisceau détectée représente l'autre valeur binaire possible pour le même élément. Ainsi la présence d'un faisceau sur une antenne de réception peut correspondre à un '1' logique et son absence à un '0' logique, ou vice-versa.

Avantageusement une absence, pendant un ou plusieurs temps symbole, de tous les faisceaux possiblement activables B1, B2, et B3 du canal utilisé, participe à coder une information transmissible sur le canal. Ceci n'est pas possible avec une modulation spatiale selon l'art antérieur.

La capacité du canal de transmission entre EA et les trois antennes RA1, RA2, et RA3 est donc :

$$C = n,$$

où $n$ est le nombre d'antennes en réception.
Soit C = 3 pour l'exemple décrit.

Avantageusement, le nombre d'antennes utilisées pour la technique de modulation spatiale selon l'invention n'est pas obligatoirement une puissance de deux contrairement au principe connu est mis en œuvre dans les modulations spatiales selon l'art antérieur (exemple : RASK).

La capacité d'un canal de transmission en RASK, par exemple, entre un émetteur et trois antennes en réception, est de :

$$C_{RASK} = Log_2\ n$$

Soit pour trois antennes en réception avec un émetteur unique, la capacité du canal en utilisant une modulation RASK est égale à 1,584963.

Ainsi, la mise en œuvre de la technique de modulation spatiale selon l'invention permet d'améliorer avantageusement le ratio entre la complexité de mise en œuvre et la capacité de canal de télécommunication (transmission) utilisé.

Il est entendu ici par les termes « temps symbole » ou encore « durée symbole », la durée de transmission élémentaire associée à la transmission de chacun des symboles discernables transmissibles par le canal de transmission utilisé.

La **figure 2** représente la transmission d'un fragment (triolet) '101' de la séquence binaire SEQ1 (de valeur '101000111') pendant un premier temps symbole TS1. Selon le principe précédemment décrit, le module de pré-filtrage de focalisation opère une activation des faisceaux de transmission B1 et B3 et l'absence du faisceau de transmission B2 pendant le temps symbole TS1. Ainsi, le faisceau B1 activé code un '1' logique, le faisceau B2 désactivé code un '0' logique et le faisceau de transmission B3 présent code un '1' logique. Le triolet d'éléments binaires ('0' ou '1') reçu par les antennes RA1, RA2 et RA3 code la séquence '101' logique en vue de la reconstruction en réception de la séquence SEQ 1 transmise.

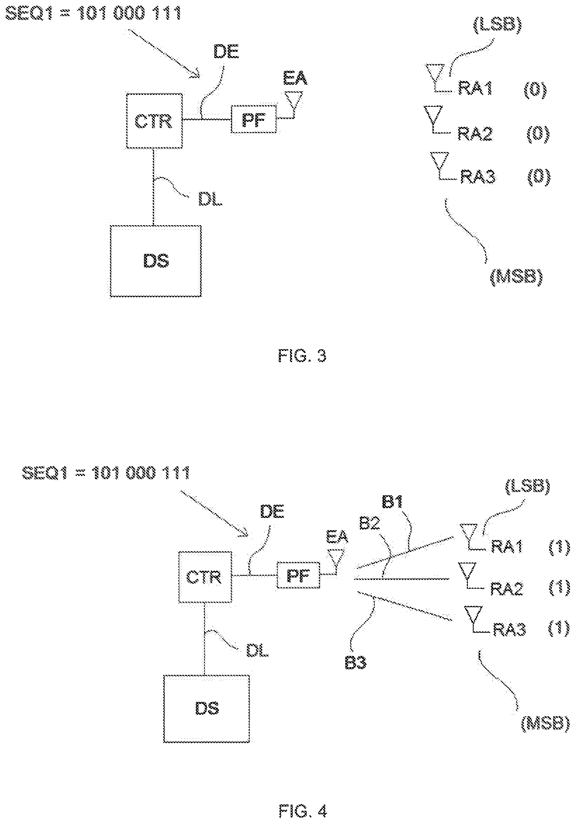

Selon le même principe, la **figure 3** représente l'émission, pendant le temps symbole TS2 suivant TS1, du fragment (triolet) d'éléments binaires suivant dans la séquence SEQ1. Pour cette séquence dont la valeur est égale à '000', le module de pré-filtrage de focalisation opère une désactivation simultanée des trois faisceaux de transmission B1, B2, et B3. Cette étape (pendant la durée symbole TS2) de la transmission correspond à la réception de la portion de séquence '000' de SEQ1.

Enfin, et selon le même principe de modulation spatiale, la **figure 4** représente la transmission du triolet '111' de la séquence SEQ1, pendant un temps symbole TS3 consécutif à TS2. Pendant ce temps symbole TS3, les trois faisceaux B1, B2 et B3 sont simultanément activés par le module de pré-filtrage de focalisation PF.

Les **figures 2, 3 et 4** illustrent ensemble la transmission par fragments (triolets) de la séquence SEQ1 représentée, de valeur '101000111'.

Bien évidemment, il est possible selon le même principe de transmettre n'importe quelle séquence binaire SEQ, pendant une période comprenant un multiple entier de $k$ temps symbole.

Toujours selon le même principe, il est possible de transmettre une séquence binaire SEQ sur un canal de transmission mettant en œuvre plusieurs émetteurs EAn vers plusieurs antennes RAn en réception.

Selon un second mode de réalisation de l'invention, le système de transmission opère une modulation de puissance pour chacun des faisceaux B1, B2 et B3. Ainsi la puissance de chacun des faisceaux est choisie parmi une multiplicité $p$ de plages (intervalles) de puissance prédéfinies, en fonction de la séquence binaire à transmettre pendant un temps symbole.

Selon ce second mode de réalisation, un ou plusieurs modules récepteur/décodeur connecté à une ou plusieurs antennes RAn est (sont) adapté(s) à distinguer différents niveaux de puissances utilisés et participant au codage d'une séquence binaire SEQ transmise pendant un temps symbole. Pour ce faire, le module de réception / décodage comprend un ou plusieurs systèmes de détection de niveau de puissance reçue.

Avantageusement, le premier et le second mode de réalisation décrits et utilisés pour la transmission respectivement d'une première et d'une seconde information binaire (séquence binaire) peuvent être combinés. Les première et seconde informations constituent alors une information unique transmise par une modulation spatiale selon le mode de réalisation préféré décrit (le premier mode ci-avant) et utilisant de surcroît une modulation de puissance telle que précédemment décrite dans le second mode de réalisation.

La reconstitution d'une séquence SEQ transmise selon le principe de modulation spatiale décrit utilise un récepteur REC adapté à la réception et au décodage d'au moins cette séquence binaire SEQ.

La séquence SEQ transmise vers le récepteur REC, et reçue par lui a fait l'objet, préalablement à son émission vers une ou plusieurs antennes cibles parmi les $n$ antennes RAn de distant EA, du pré-filtrage de focalisation par PF, et éventuellement d'une modulation de puissance transmise via les faisceaux Bn.

Le récepteur / décodeur REC comprend alors pour opérer une reconstitution de la séquence :

- un module de décodage DEC1 d'une première information binaire transmise et au moins partiellement codée en utilisant l'absence délibérée de focalisation vers l'une quelconque (soit absence vers l'ensemble) des antennes reliées audit récepteur REC, depuis au moins un émetteur distant, pendant un nombre entier k prédéterminé de temps symbole,
- et/ou un module de décodage DEC2 d'une seconde information binaire codée par modulation d'une puissance émise par au moins une antenne d'émission EA distante.

Selon une variante du mode de réalisation, les modules DEC1 et DEC2 peuvent être confondus.

L'invention ne concerne pas le seul mode de réalisation décrit ci-avant mais concerne plus largement toute modulation spatiale pour laquelle un codage total ou partiel d'information peut être réalisé par l'absence simultanée de faisceaux de transmission vers chacune des antennes utilisées en réception, pendant un ou plusieurs temps symbole, et utilisant éventuellement, en outre, une modulation de puissance pour tout ou partie des faisceaux.

## Revendications

1. Procédé de transmission, depuis au moins une antenne d'émission (EA), d'un signal source comprenant une pluralité de séquences binaires (SEQn), vers tout ou partie de n antennes (RA) de réception, n étant un entier supérieur ou égal à 2, ledit procédé mettant en œuvre, préalablement à une étape d'émission de l'une desdites séquences binaires (SEQ) dudit signal source, un pré-filtrage de focalisation de ladite séquence binaire (SEQ) vers une antenne cible parmi lesdites n antennes (RA) de réception, ledit pré-filtrage de focalisation associé étant choisi en fonction d'une valeur de ladite première séquence binaire,
ledit procédé étant **caractérisé en ce qu'**il comprend au moins une étape de transmission adaptée à transmettre une première information binaire en utilisant l'absence simultanée de focalisation vers chacune des n antennes (RA) de réception, pendant un nombre entier k prédéterminé de temps symbole.

2. Procédé de transmission selon la revendication 1, **caractérisé en ce qu'**il comporte en outre une modulation d'une puissance émise par ladite au moins une antenne d'émission EA, participant à un codage d'une seconde information binaire.

3. Procédé de transmission selon la revendication 1, **caractérisé en ce que** ladite seconde information binaire est identique à ladite première information binaire.

4. Procédé selon l'un quelconque des revendications 1 à 2, **caractérisé en ce que** ledit nombre entier k de temps symbole est inférieur ou égal à 5.

5. Procédé selon l'une quelconque des revendications 1 à 3, **caractérisé en ce que** ladite modulation de puissance comprend une sélection d'un intervalle de valeurs de puissance parmi un nombre entier p prédéterminé d'intervalles de valeurs de puissance.

6. Dispositif récepteur (REC) adapté à la réception et au décodage d'au moins une séquence binaire (SEQ) d'un signal comprenant une pluralité de séquences binaires (SEQn), ladite séquence (SEQ) ayant fait l'objet, préalablement à son émission par un émetteur distant, d'un pré-filtrage de focalisation vers une antenne cible parmi n antennes (RA) de réception,
et ledit pré-filtrage de focalisation associé étant choisi en fonction d'une valeur de ladite séquence binaire (SEQ), ledit récepteur (REC) étant **caractérisé en ce qu'**il comprend :

- un module (DEC1) de décodage d'une première information binaire transmise et au moins partiellement codée en utilisant l'absence simultanée de focalisation vers l'ensemble des antennes reliées audit récepteur (REC), depuis au moins un émetteur distant, pendant un nombre entier k prédéterminé de temps symbole.

7. Dispositif selon la revendication 6, **caractérisé en ce qu'**il comporte en outre un module de décodage (DEC2) d'une seconde information binaire codée par modulation de puissance émise par au moins une antenne d'émission (EA) distante.

8. Produit programme d'ordinateur chargeable directement dans la mémoire interne d'un ordinateur comprenant des portions de code de logiciel pour l'exécution des étapes du procédé selon l'une quelconque des revendications 1 à 5, lorsque ledit programme est exécuté sur un ordinateur.

**Patentansprüche**

1. Verfahren zur Übertragung, ab mindestens einer Sendeantenne (EA), eines Quellsignals, umfassend eine Vielzahl von binären Sequenzen (SEQn), an alle oder einen Teil von n Empfangsantennen (RA), wobei n eine Ganzzahl größer oder gleich 2 ist, wobei das Verfahren, vor einem Sendeschritt von einer der binären Sequenzen (SEQ) des Quellsignals, eine Fokussierungs-Vorfilterung der binären Sequenz (SEQ) in Richtung einer Zielantenne von den n Empfangsantennen (RA) durchführt, wobei die zugeordnete Fokussierungs-Vorfilterung in Abhängigkeit von einem Wert der ersten binären Sequenz ausgewählt ist,

wobei das Verfahren **dadurch gekennzeichnet ist, dass** es mindestens einen Übertragungsschritt umfasst, der geeignet ist, um eine erste binäre Information zu übertragen, bei Nutzung der gleichzeitigen Abwesenheit von Fokussierung in Richtung von jeder der n Empfangsantennen (RA), während einer vorher festgelegten Ganzzahl k Symbolzeit.

2. Übertragungsverfahren nach Anspruch 1, **dadurch gekennzeichnet, dass** es ferner eine Modulation einer von der mindestens einen Sendeantenne EA gesendeten Leistung aufweist, die an einer Codierung einer zweiten binären Information beteiligt ist.

3. Übertragungsverfahren nach Anspruch 1, **dadurch gekennzeichnet, dass** die zweite binäre Information mit der ersten binären Information identisch ist.

4. Verfahren nach einem der Ansprüche 1 bis 2, **dadurch gekennzeichnet, dass** die Ganzzahl k Symbolzeit kleiner oder gleich 5 ist.

5. Verfahren nach einem der Ansprüche 1 bis 3, **dadurch gekennzeichnet, dass** die Leistungsmodulation eine Auswahl eines Leistungswerteintervalls aus einer vorher festgelegten Ganzzahl p von Leistungswerteintervallen umfasst.

6. Empfangsvorrichtung (REC), die für den Empfang und die Decodierung von mindestens einer binären Sequenz (SEQ) eines Signals geeignet ist, umfassend eine Vielzahl von binären Sequenzen (SEQn), wobei die Sequenz (SEQ) vor ihrer Sendung durch einen entfernten Sender Gegenstand einer Fokussierungs-Vorfilterung in Richtung einer Zielantenne von n Empfangsantennen (RA) war,
und wobei die zugeordnete Fokussierungs-Vorfilterung in Abhängigkeit von einem Wert der binären Sequenz (SEQ) ausgewählt ist, wobei der Empfänger (REC) **dadurch gekennzeichnet ist, dass** er umfasst:

- ein Decodierungsmodul (DEC1) einer übermittelten und mindestens teilweise codierten ersten binären Information, bei Nutzung der gleichzeitigen Abwesenheit von Fokussierung in Richtung aller Antennen, die mit dem Empfänger (REC) verbunden sind, ab mindestens einem entfernten Sender, während einer vorher festgelegten Ganzzahl k Symbolzeit.

7. Vorrichtung nach Anspruch 6, **dadurch gekennzeichnet, dass** sie ferner ein Decodierungsmodul (DEC2) einer zweiten, durch Leistungsmodulation codierten binären Information, gesendet durch mindestens eine entfernte Sendeantenne (EA), aufweist.

**8.** Rechnerprogrammprodukt, das direkt in den internen Speicher eines Rechners ladbar ist, umfassend Softwarecodeabschnitte für die Ausführung der Schritte des Verfahrens nach einem der Ansprüche 1 bis 5, wenn das Programm auf einem Rechner ausgeführt wird.

**Claims**

**1.** Method for transmission, from at least one emitter antenna (EA), of a source signal comprising a plurality of binary sequences (SEQn), to all or part of n receiver antennas (RA), n being an integer greater than or equal to 2, said method implementing, before a step of emitting one of said binary sequences (SEQ) of said source signal, a prefiltering of focusing said binary sequence (SEQ) towards one target antenna out of said n receiver antennas (RA), said associated focusing prefiltering begin chosen according to a value of said first binary sequence, said method being **characterised in that** it further comprises at least one step of transmission suitable for transmitting a first piece of binary information by using the simultaneous absence of focusing towards each of the n receiver antennas (RA), during a predetermined integer k of symbol times.

**2.** Transmission method according to claim 1, **characterised in that** it further comprises a modulation of a power emitted by said at least one emitter antenna (EA), contributing to an encoding of a second piece of binary information.

**3.** Transmission method according to claim 1, **characterised in that** said second piece of binary information is identical to said first piece of binary information.

**4.** Method according to any one of claims 1 to 2, **characterised in that** said integer k of symbol times is less than or equal to 5.

**5.** Method according to any one of claims 1 to 3, **characterised in that** said power modulation comprises a selection of an interval of power values from a predetermined integer p of intervals of power values.

**6.** Receiver device (REC) suitable for receiving and decoding at least one binary sequence (SEQ) of a signal comprising a plurality of binary sequences (SEQn), said sequence (SEQ) having been subjected, before its emission by a remote emitter, to a prefiltering of focusing towards one target antenna out of n receiver antennas (RA), and said associated focusing prefiltering being chosen according to a value of said binary sequence (SEQ), said receiver (REC) being **characterised in that** it comprises:

- a module (DEC1) for decoding a first piece of binary information transmitted and at least partially encoded by using the simultaneous absence of focusing towards all of the antennas connected to said receiver (REC), from at least one remote emitter, during a predetermined integer k of symbol times.

**7.** Device according to claim 6, **characterised in that** it further comprises a module (DEC2) for decoding a second piece of binary information encoded by modulation of power emitted by at least one remote emitter antenna (EA).

**8.** Computer program product that can be loaded directly into the internal memory of a computer comprising portions of software code for the execution of the steps of the method according to any one of claims 1 to 5, when said program is executed on a computer.

DE

EA

B1    (LSB)

B2

CTR — PF — ▽

RA1    (00)

▽ RA2    (01)

DL

▽ RA3    (10)

B3    B4

▽ RA4    (11)

(MSB)

DS

FIG.1

SEQ1 = 101 000 111

DE

EA

B1    (LSB)

CTR — PF — ▽

RA1    (1)

▽ RA2    (0)

DL

B3

▽ RA3    (1)

DS

(MSB)

FIG.2

EP 3 411 962 B1

SEQ1 = 101 000 111

FIG. 3

SEQ1 = 101 000 111

FIG. 4

9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0959152

- FR 2524229